# EUROPÄISCHE PATENTANMELDUNG

(11) **EP 3 399 187 A1**
(43) Veröffentlichungstag der Anmeldung: **07.11.2018**
(21) Anmeldenummer: 18174389.9
(22) Anmeldetag: 19.10.2015
(51) Int. Cl.: F04B 9/02, F04B 17/03

(54) **VERFAHREN ZUR MONTAGE EINER KOLBENBAUGRUPPE FÜR EINE DRUCKERZEUGUNGSVORRICHTUNG EINES BREMSSYSTEMS**

(30) Priorität: 11.12.2014 DE 102014225590
(62) Teilanmeldung aus: 15784018.2
(71) Anmelder: Robert Bosch GmbH, 70442 Stuttgart (DE)
(72) Erfinder: Tandler, Juergen, 87629 Fuessen (DE); Mayr, Matthias, 87549 Rettenberg (DE); Weh, Andreas, 87477 Sulzberg (DE)

(57) **Zusammenfassung**

Verfahren zur Montage einer Kolbenbaugruppe (5) für eine Druckerzeugungsvorrichtung (12) eines Bremssystems (1) eines Kraftfahrzeuges, mit den Schritten: (S1) Verbinden des Kolbens (10) mit einer Spindel (17) eines vormontierten Kugelgewindetriebs (16); (S2) Befestigen des Kolbens (10) zusammen mit dem Kugelgewindetrieb (16) an einem Flansch (18) der Druckerzeugungsvorrichtung (12), wobei eine an dem Kolben (10) ausgebildete Ausformung (10b) in einer in dem Flansch (18) ausgebildeten Aussparung derart aufnehmbar ist, dass der Kolben verdrehsicher axial verstellbar ist; und (S3) Vorsehen eines Lagerelements (26) zum Lagern des Kolbens (10) und dem mit dem Kolben (10) verbundenen Kugelgewindetrieb (16).

## Beschreibung

Die Erfindung betrifft eine Kolbenbaugruppe für eine Druckerzeugungsvorrichtung eines Bremssystems eines Kraftfahrzeuges. Die Erfindung betrifft des Weiteren eine Druckerzeugungsvorrichtung mit der erfindungsgemäßen Kolbenbaugruppe. Die Erfindung betrifft überdies ein Hydraulikaggregat zum Zusammenwirken mit der Druckerzeugungsvorrichtung. Die Erfindung betrifft des Weiteren ein Bremssystem für ein Kraftfahrzeug. Die Erfindung betrifft überdies ein Verfahren zur Montage der Kolbenbaugruppe für die Druckerzeugungsvorrichtung des Bremssystems des Kraftfahrzeuges.

### Stand der Technik

Hydraulische Fahrzeugbremsanlagen weisen zur Bremsdruckerzeugung herkömmlicherweise Kolbenpumpen auf.

Die DE 10 2008 002 740 A1 offenbart eine Kolbenpumpe insbesondere zur Bremsdruckregelung in einer hydraulischen Fahrzeugbremsanlage. Die Kolbenpumpe weist zur Steuerung des Druckmittelflusses ein in einem Ventildeckel untergebrachtes Auslassventil auf. Ein Abströmkanal der Kolbenpumpe mündet in einen Druckmittelkanal eines Pumpengehäuses. Dieser Druckmittelkanal ist, in Richtung der Längsachse der Kolbenpumpe betrachtet, oberhalb eines im Inneren des Pumpengehäuses liegenden Endes des Ventildeckels angeordnet.

Des Weiteren kann zur Druckerzeugung alternativ eine Zylinder-Kolben-Anordnung vorgesehen werden, bei welcher eine Antriebseinrichtung vorgesehen ist, die dazu ausgebildet ist, den Kolben in einer dafür vorgesehenen Öffnung eines Hydraulikaggregats axial zu verstellen.

### Offenbarung der Erfindung

Die vorliegende Erfindung schafft eine Kolbenbaugruppe für eine Druckerzeugungsvorrichtung eines Bremssystems eines Kraftfahrzeuges, mit einem Kolben, welcher zumindest teilweise in eine in einem Hydraulikaggregat des Bremssystems ausgebildete Öffnung einfügbar und in der Öffnung axial verstellbar ist, und mit einem Kugelgewindetrieb zum axialen Verstellen des Kolbens, wobei der Kugelgewindetrieb eine durch einen Elektromotor über ein Getriebe in eine Drehbewegung versetzbare Mutter und eine Spindel aufweist, wobei die Spindel durch die Drehbewegung der Mutter und über eine, zwischen der Mutter und der Spindel in einem Kreislauf umlaufenden Kugeln des Kugelgewindetriebs bewirkte Kraftübertragung axial verstellbar ist, wobei der Kolben mit der axial verstellbaren Spindel des Kugelgewindetriebs derart verbunden ist, dass sich der Kolben mit der axial verstellbaren Spindel des Kugelgewindetriebs mitbewegt, wobei in einer ersten, eingefahrenen Stellung des Kolbens der Kolben zumindest einen ersten Teilbereich der Mutter umgreift, und in einer zweiten, ausgefahrenen Stellung des Kolbens der Kolben höchstens einen zweiten Teilbereich der Mutter umgreift, und wobei der erste Teilbereich größer als der zweite Teilbereich ist.

Die vorliegende Erfindung schafft des Weiteren eine Druckerzeugungsvorrichtung mit einer erfindungsgemäßen Kolbenbaugruppe, und einem Flansch, welcher an dem Hydraulikaggregat des Bremssystems befestigbar ist, und welcher an einer der Kolbenbaugruppe zugewandten Seite eine zu der Öffnung des Hydraulikaggregats deckungsgleiche hohlzylindrische Ausformung aufweist, in welcher der Kolben durch den Kugelgewindetrieb zumindest teilweise axial verstellbar ist.

Die vorliegende Erfindung schafft des Weiteren ein Hydraulikaggregat zum Zusammenwirken mit einer Druckerzeugungsvorrichtung nach einem der Ansprüche 5 bis 8, mit einer Öffnung, welche derart ausgebildet ist, dass der Kolben der Druckerzeugungsvorrichtung durch den Kugelgewindetrieb zumindest teilweise in der Öffnung axial verstellbar ist.

Die vorliegende Erfindung schafft des Weiteren ein Bremssystem für ein Kraftfahrzeug mit der erfindungsgemäßen Druckerzeugungsvorrichtung und dem erfindungsgemäßen Hydraulikaggregat zum Zusammenwirken mit der Druckerzeugungsvorrichtung.

Die vorliegende Erfindung schafft des Weiteren ein Verfahren zur Montage einer Kolbenbaugruppe für eine Druckerzeugungsvorrichtung eines Bremssystems eines Kraftfahrzeuges. Das Verfahren umfasst ein Verbinden des Kolbens mit einer Spindel eines vormontierten Kugelgewindetriebs. Das Verfahren umfasst des Weiteren ein Befestigen des Kolbens zusammen mit dem Kugelgewindetrieb an einem Flansch der Druckerzeugungsvorrichtung, wobei eine an dem Kolben ausgebildete Ausformung in einer in dem Flansch ausgebildeten Aussparung derart aufnehmbar ist, dass der Kolben verdrehsicher axial verstellbar ist. Das Verfahren umfasst überdies ein Vorsehen eines Lagerelements zum Lagern des Kolbens und dem mit dem Kolben verbundenen Kugelgewindetrieb.

Eine Idee der vorliegenden Erfindung ist es, den Kugelgewindetrieb in dem Kolben aufzunehmen. Dadurch kann ein Boxvolumen des Bremssystems mit hydraulischer Druckerzeugung mittels des Kolbens, welcher sich durch einen Elektromotor der Druckerzeugungsvorrichtung erstreckt, erreicht werden.

Vorteilhafte Ausführungsformen und Weiterbildungen ergeben sich aus den Unteransprüchen sowie aus der Beschreibung unter Bezugnahme auf die Figuren.

Gemäß einer bevorzugten Weiterbildung ist vorgesehen, dass eine Länge der Mutter entlang einer Verstellachse des axial verstellbaren Kolbens definiert ist, wobei der erste Teilbereich der Mutter zumindest 50% der Länge der Mutter, vorzugsweise zumindest 75% der Länge der Mutter aufweist, und wobei der zweite Teilbereich der Mutter weniger als 50% der Länge der Mutter, vorzugsweise weniger als 25% der Länge der Mutter aufweist. Dadurch kann in der ersten Stellung des Kolbens in vorteilhafter Weise eine Verkürzung des Boxvolumens des Bremssystems um eine Hublänge des Kolbens erreicht werden.

Gemäß einer weiteren bevorzugten Weiterbildung ist vorgesehen, dass der Kolben mit der Spindel des Kugelgewindetriebs durch eine Schraubverbindung und/oder eine Schweißverbindung verbunden ist. Der Kolben kann somit in einfacher und sicherer Art und Weise drehfest an der Spindel befestigt werden.

Gemäß einer weiteren bevorzugten Weiterbildung ist vorgesehen, dass der Kolben an einer Außenumfangsfläche zumindest eine Ausformung aufweist, welche in einer in einem Flansch und/oder dem Hydraulikaggregat ausgebildeten Aussparung derart aufnehmbar ist, dass der Kolben verdrehsicher axial verstellbar ist. Somit kann ein Mitdrehen des Kolbens mit der Mutter des Kugelgewindetriebs verhindert werden.

Gemäß einer weiteren bevorzugten Weiterbildung ist vorgesehen, dass das Hydraulikaggregat zumindest eine in der Öffnung angeordnete Aussparung aufweist, welche dazu ausgebildet ist, zumindest eine an einer Außenumfangsfläche des Kolbens ausgebildete Ausformung derart aufzunehmen, dass der Kolben verdrehsicher axial verstellbar ist. Somit kann ein Mitdrehen des Kolbens mit der Mutter des Kugelgewindetriebs verhindert werden.

Gemäß einer weiteren bevorzugten Weiterbildung ist vorgesehen, dass die Ausformung durch ein stiftförmiges Element ausgebildet ist, welches mit der in dem Kolben ausgebildeten Aussparung formschlüssig verbindbar ist. Somit kann ein Mitdrehen des Kolbens mit der Mutter des Kugelgewindetriebs verhindert werden.

Gemäß einer weiteren bevorzugten Weiterbildung ist vorgesehen, dass ein Stützelement zum Vorspannen des Kolbens und dem mit dem Kolben verbundenen Kugelgewindetrieb vorgesehen wird, wobei das Stützelement eine Anlauffläche für das Lagerelement zum Lagern des Kolbens und dem mit dem Kolben verbundenen Kugelgewindetrieb bereitstellt. Somit kann eine kompakte Druckerzeugungsvorrichtung für das Bremssystem des Kraftfahrzeuges vorgesehen werden.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
- Fig. 1: eine schematische Darstellung eines Teilbereiches eines Bremssystems eines Kraftfahrzeuges gemäß einer bevorzugten Ausführungsform der Erfindung;
- Fig. 2: eine Explosionsdarstellung einer Kolbenbaugruppe gemäß der bevorzugten Ausführungsform der Erfindung;
- Fig. 3: eine Explosionsdarstellung der Kolbenbaugruppe gemäß einer weiteren bevorzugten Ausführungsform der Erfindung;
- Fig. 4: eine Explosionsdarstellung einer Druckerzeugungsvorrichtung gemäß der bevorzugten Ausführungsform der Erfindung;
- Fig. 5: eine schematische Darstellung eines Teilbereiches der Druckerzeu-gungsvorrichtung gemäß der bevorzugten Ausführungsform der Er-findung;
- Fig. 6: eine schematische Darstellung des Bremssystems gemäß der bevor-zugten Ausführungsform der Erfindung;
- Fig. 7: eine schematische Darstellung des Bremssystems gemäß der bevor-zugten Ausführungsform der Erfindung; und
- Fig. 8: ein Ablaufdiagram eines Verfahrens zur Montage der Druckerzeu-gungsvorrichtung gemäß der bevorzugten und der weiteren bevor-zugten Ausführungsform der Erfindung.

In den Figuren der Zeichnungen bezeichnen gleiche Bezugszeichen gleiche oder funktionsgleiche Elemente, Bauteile oder Komponenten, soweit nichts Gegenteiliges angegeben ist.

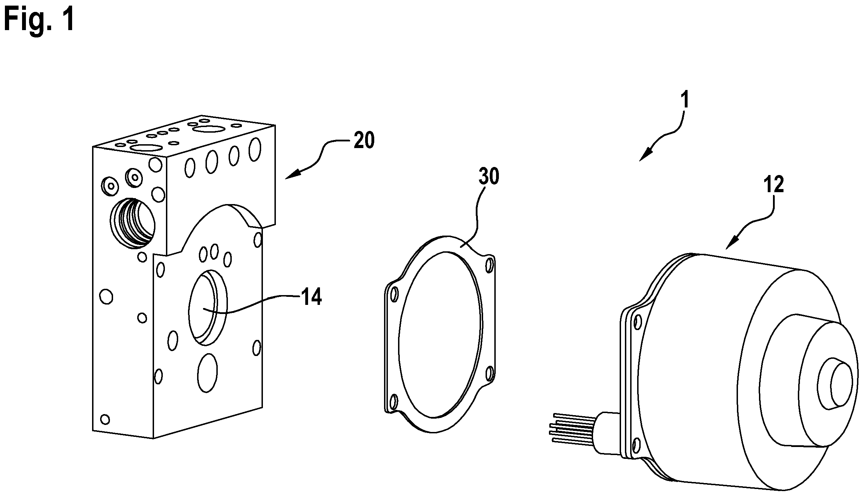

Fig. 1 zeigt eine schematische Darstellung eines Teilbereiches eines Bremssystems eines Kraftfahrzeuges gemäß einer bevorzugten Ausführungsform der Erfindung.

Das Bremssystem 1 weist eine Druckerzeugungsvorrichtung 12 und ein Hydraulikaggregat 20 auf. Andere Komponenten des Bremssystems 1 werden aus Gründen der Vereinfachung nicht weiter beschrieben. Die Druckerzeugungsvorrichtung 12 ist derart ausgebildet, dass diese an dem Hydraulikaggregat 20 befestigbar ist. Das Hydraulikaggregat 20 weist eine Öffnung 14 auf, welche dazu ausgebildet ist, einen (in Fig. 1 nicht dargestellten) Kolben der Druckerzeugungsvorrichtung 12 aufzunehmen. Zwischen der Druckerzeugungsvorrichtung 12 und dem Hydraulikaggregat 20 ist im montierten Zustand ein Dichtelement 30 zum Abdichten der Verbindung zwischen der Druckerzeugungsvorrichtung 12 und dem Hydraulikaggregat 20 angeordnet.

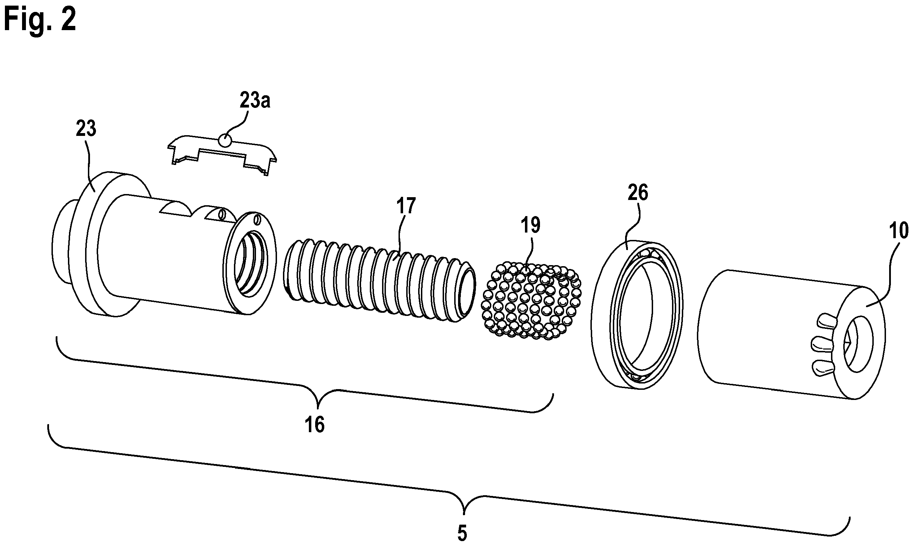

Fig. 2 zeigt eine Explosionsdarstellung einer Kolbenbaugruppe gemäß der bevorzugten Ausführungsform der Erfindung.

Die Kolbenbaugruppe 5 weist den Kolben 10, den Kugelgewindetrieb 16 sowie ein Lagerelement 26 auf. Der Kolben 10 ist vorzugsweise zylindrisch ausgebildet. Alternativ kann der Kolben 10 auch eine andere geeignete Form aufweisen. Der Kugelgewindetrieb 16 weist eine Spindel 17, eine Vielzahl von Kugeln 19 sowie eine Mutter 23 auf. Die Kugeln 19 sind im montierten Zustand des Kugelgewindetriebs zwischen der Spindel 17 und der Mutter 23 derart angeordnet, dass eine Drehung der ortsfest angeordneten Mutter 23 eine Translationsbewegung der Spindel 17 bewirkt. Die Mutter 23 weist des Weiteren ein Umlenkstück 23a auf. Dieses bewirkt eine Umlenkung der Kugeln, sodass eine fortlaufende axiale Verstellung der Spindel 17 relativ zu der Mutter 23 ermöglicht wird.

Das Lagerelement 26 lagert den Kolben 10 und die im montierten Zustand der Druckerzeugungsvorrichtung 12 mit dem Kolben 10 verbundene Spindel 17. Die Spindel 17 ist mit dem Kolben 10 in vorteilhafter Weise durch eine Schraubverbindung verbunden. Hierfür ist an einer engen Seite des Kolbens 10 ein (in Fig. 2 nicht gezeigtes) Gewinde ausgebildet, an welchem die Spindel 17 durch ein entsprechendes Gewinde verbunden ist. Alternativ kann die Spindel 17 mit dem Kolben 10 beispielsweise auch durch eine Schweißverbindung verbunden sein.

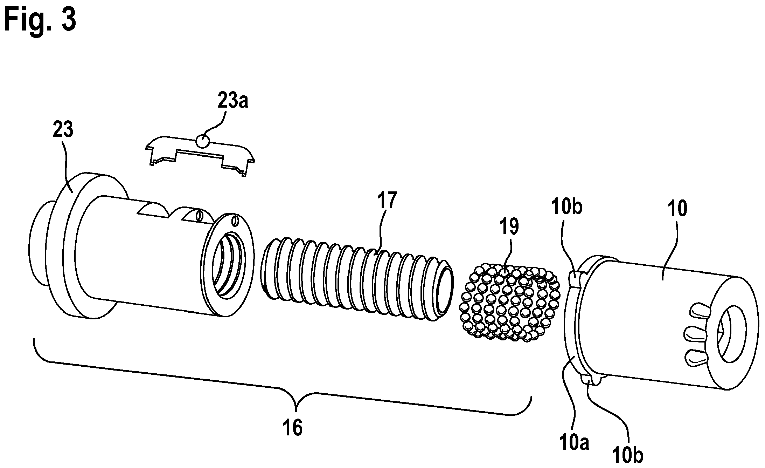

Fig. 3 zeigt eine Explosionsdarstellung der Kolbenbaugruppe gemäß einer weiteren bevorzugten Ausführungsform der Erfindung.

An einer Außenumfangsfläche des Kolbens 10 ist vorzugsweise eine Ausformung 10b, im vorliegenden Ausführungsbeispiel drei Ausformungen 10b, ausgebildet. Die Ausformungen 10b sind an einem Kragen 10a des Kolbens 10 angeordnet. Der Kragen 10a des Kolbens 10 dient zur Stabilisierung bei Drücken, die auf eine Mantelfläche wirken.

Die Ausformungen 10b sind bei einer axialen Verstellung des Kolbens 10 in einer in einem (in Fig. 3 nicht gezeigten) Flansch und/oder einem (in Fig. 3 nicht gezeigten) Hydraulikaggregat ausgebildeten Aussparung derart aufnehmbar, dass der Kolben (10) verdrehsicher axial verstellbar ist. Die Ausformungen 10b verhindern somit, dass durch eine Rotation eines Elektromotors der Druckerzeugungsvorrichtung sowie eine dadurch bewirkte Rotation der Mutter der Druckerzeugungsvorrichtung die Spindel sowie der damit verbundene Kolben mitdreht.

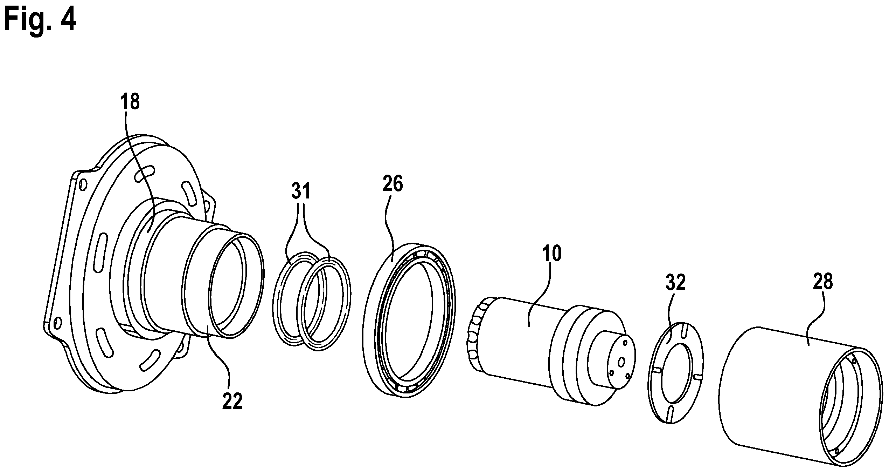

Fig. 4 zeigt eine Explosionsdarstellung einer Druckerzeugungsvorrichtung gemäß der bevorzugten Ausführungsform der Erfindung.

Der Kolben 10 ist in Fig. 4 mit dem darin angeordneten Kugelgewindetrieb dargestellt. Der Flansch 18 weist eine hohlzylindrische Ausformung 22 auf, welche derart ausgebildet ist, dass der Kolben 10 mit dem darin integrierten Kugelgewindetrieb in der Ausformung 22 aufnehmbar ist.

Darüber hinaus sind eine Mehrzahl von Dichtungen 31, das Lagerelement 26, ein weiteres Lagerelement 32 und das Stützelement 28 vorgesehen. Die Dichtelemente 31 umfassen im montierten Zustand der Druckerzeugungsvorrichtung 12 den Kolben 10 und sind zwischen dem Kolben 10 und der hohlzylindrischen Ausformung 22 des Flansches 18 angeordnet. Das Lagerelement 26 umfasst die hohlzylindrische Ausformung 22 des Flansches 18 und ist somit an einer Außenumfangsfläche der hohlzylindrischen Ausformung 22 des Flansches 18 angeordnet. Das weitere Lagerelement 32 dient der Lagerung des Kolbens 10. Das Stützelement 28 dient einem Vorspannen des Kolbens 10 und dem mit dem Kolben 10 verbundenen Kugelgewindetrieb, wobei das Stützelement 28 eine Anlauffläche für das Lagerelement 26 zum Lagern des Kolbens 10 und dem mit dem Kolben 10 verbundenen Kugelgewindetrieb bereitstellt. Das Stützelement 28 ist verdreh- und verliersicher befestigt, sodass die durch einen Druck in einem Kolbenraum des Kolbens 10 entstehenden Axialkräfte aufgenommen werden können. Das Stützelement 28 ist durch eine Schraube mit dem Flansch 18 verbunden. Alternativ kann das Stützelement 28 auch über eine Schweißverbindung oder eine andere geeignete Verbindung mit dem Flansch 18 verbunden werden.

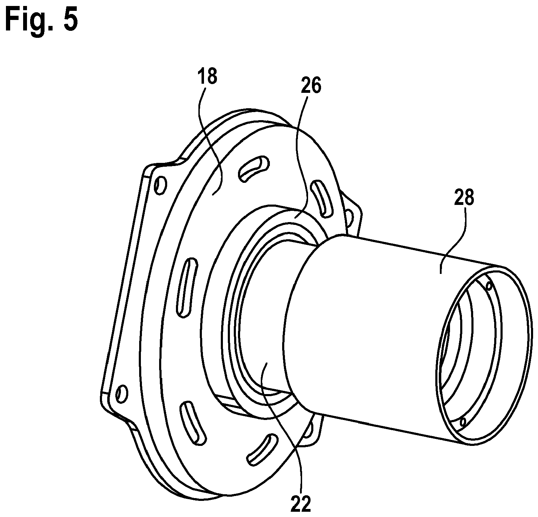

Fig. 5 zeigt eine schematische Darstellung eines Teilbereiches der Druckerzeugungsvorrichtung gemäß der bevorzugten Ausführungsform der Erfindung.

Das Lagerelement 26 und das Stützelement 28 sind in Fig. 5 auf die hohlzylindrische Ausformung 22 des Flansches 18 aufgesteckt. Die hohlzylindrische Ausformung 22 des Flansches 18 wird vorzugsweise durch eine Bohrung gebildet.

Alternativ kann die hohlzylindrische Ausformung 22 auch in anderer Art und Weise hergestellt werden.

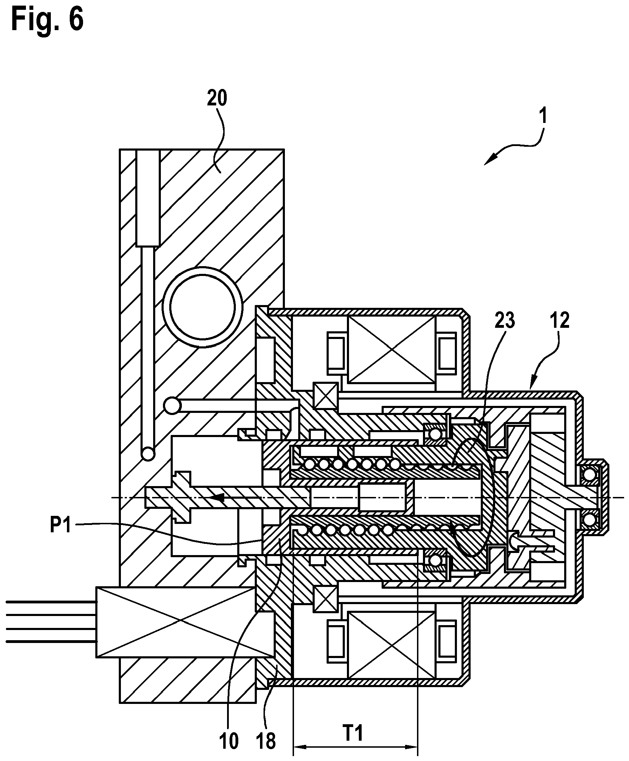

Fig. 6 zeigt eine schematische Darstellung des Bremssystems gemäß der bevorzugten Ausführungsform der Erfindung.

In der in Fig.6 gezeigten Darstellung ist die Druckerzeugungsvorrichtung 12 mittels dem Flansch 18 an dem Hydraulikaggregat 20 montiert. Der Kolben 10 ist teilweise in die in einem Hydraulikaggregat 20 des Bremssystems 1 ausgebildete Öffnung eingefügt und in der Öffnung durch den Kugelgewindetrieb axial verstellbar. Der Kugelgewindetrieb weist die durch den Elektromotor über das Getriebe in eine Drehbewegung versetzbare Mutter 23 und die Spindel auf, wobei die Spindel durch die Drehbewegung der Mutter 23 und über eine, zwischen der Mutter 23 und der Spindel in einem Kreislauf umlaufenden Kugeln des Kugelgewindetriebs bewirkte Kraftübertragung axial verstellbar ist.

Der Kolben 10 ist mit der axial verstellbaren Spindel des Kugelgewindetriebs derart verbunden, dass sich der Kolben 10 mit der axial verstellbaren Spindel des Kugelgewindetriebs mitbewegt, wobei in einer in Fig. 6 gezeigten ersten, eingefahrenen Stellung P1 des Kolbens 10 der Kolben 10 einen ersten Teilbereich T1 der Mutter 23 umgreift. Eine Länge der Mutter 23 ist entlang einer Verstellachse des axial verstellbaren Kolbens 10 definiert. Vorzugsweise weist der erste Teilbereich T1 der Mutter 23 zumindest 50% der Länge der Mutter 23 auf. Alternativ kann der erste Teilbereich T1 der Mutter 23 auch zumindest 75% der Länge der Mutter 23 aufweisen.

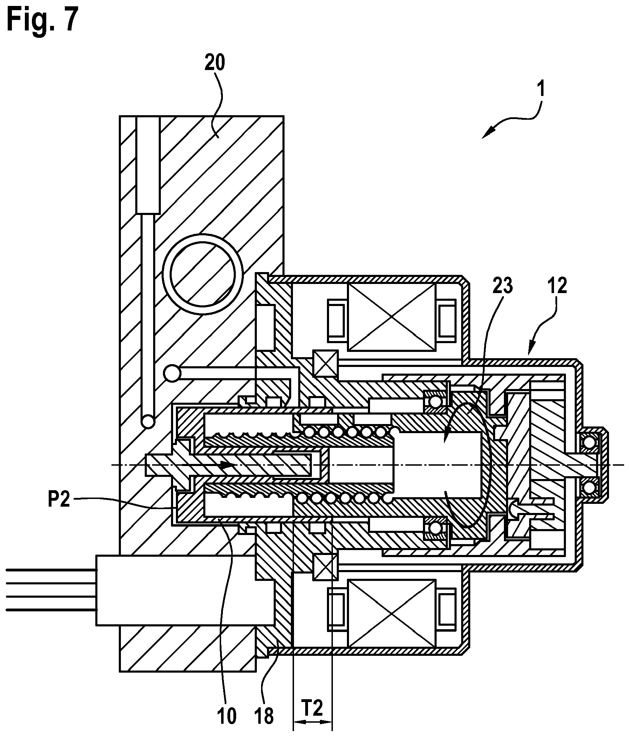

Fig. 7 zeigt eine schematische Darstellung des Bremssystems gemäß der bevorzugten Ausführungsform der Erfindung.

In der in Fig.7 gezeigten Darstellung ist der Kolben 10 in einer zweiten, ausgefahrenen Stellung P2 angeordnet, in welcher der Kolben 10 einen zweiten Teilbereich T2 der Mutter 23 umgreift. Der erste Teilbereich T1 der Mutter 23 ist vorzugsweise größer als der zweite Teilbereich (T2) der Mutter 23. Die Länge der Mutter 23 ist entlang einer Verstellachse des axial verstellbaren Kolbens 10 definiert. Vorzugsweise weist der zweite Teilbereich T2 der Mutter 23 höchstens 50% der Länge der Mutter 23 auf. Alternativ kann der erste Teilbereich T1 der Mutter 23 auch höchstens 25% der Länge der Mutter 23 aufweisen.

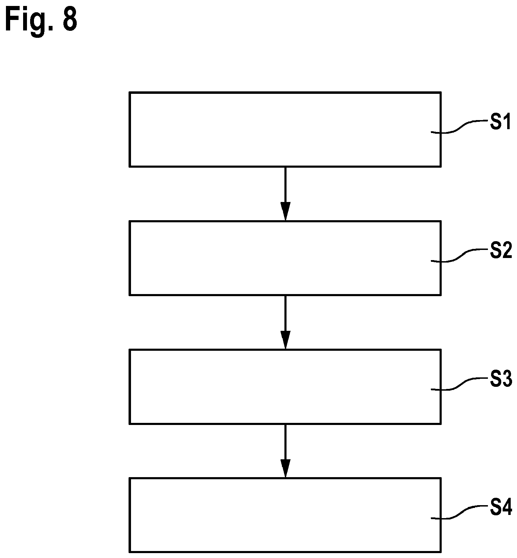

Fig. 8 zeigt ein Ablaufdiagram eines Verfahrens zur Montage der Druckerzeugungsvorrichtung gemäß der bevorzugten und der weiteren bevorzugten Ausführungsform der Erfindung.

Das Verfahren zur Montage des Kolbens für die Druckerzeugungsvorrichtung des Bremssystems umfasst ein Verbinden S1 des Kolbens mit einer Spindel eines vormontierten Kugelgewindetriebs. Das Verfahren umfasst des Weiteren ein Befestigen S2 des Kolbens zusammen mit dem Kugelgewindetrieb an einem Flansch der Druckerzeugungsvorrichtung, wobei eine an dem Kolben ausgebildete Ausformung in einer in dem Flansch ausgebildeten Aussparung derart aufnehmbar ist, dass eine Winkelausrichtung des Kolbens zu dem Flansch fixiert wird. Das Verfahren umfasst des Weiteren ein Vorsehen eines Lagerelements zum Lagern des Kolbens und des mit dem Kolben verbundenen Kugelgewindetriebs. Das Verfahren umfasst überdies das Vorsehen eines Stützelementes zum Vorspannen des Kolbens und des mit dem Kolben verbundenen Kugelgewindetriebs, wobei das Stützelement eine Anlauffläche für das Lagerelement zum Lagern des Kolbens und des mit dem Kolben verbundenen Kugelgewindetriebs bereitstellt.

Obwohl die vorliegende Erfindung anhand bevorzugter Ausführungsbeispiele vorstehend beschrieben wurde, ist sie nicht darauf beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Beispielsweise kann der Flansch bzw. die an dem Flansch ausgebildete hohlzylindrische Ausformung auch eine andere geeignete Form aufweisen, welche in vorteilhafter Weise an den Kolben angepasst ist. Des Weiteren kann die Führung des Kolbens auch in anderer Art und Weise sowie mit anderen geeigneten Lagerelementen vorgesehen werden.

## Patentansprüche

1. Verfahren zur Montage einer Kolbenbaugruppe (5) für eine Druckerzeugungsvorrichtung (12) eines Bremssystems (1) eines Kraftfahrzeuges, mit den Schritten:
Verbinden (S1) eines Kolbens (10) mit einer Spindel (17) eines vormontierten Kugelgewindetriebs (16);
Befestigen (S2) des Kolbens (10) zusammen mit dem Kugelgewindetrieb (16) an einem Flansch (18) der Druckerzeugungsvorrichtung (12), wobei eine an dem Kolben (10) ausgebildete Ausformung (10b) in einer in dem Flansch (18) ausgebildeten Aussparung derart aufnehmbar ist, dass der Kolben verdrehsicher axial verstellbar ist; und
Vorsehen (S3) eines Lagerelements (26) zum Lagern des Kolbens (10) und dem mit dem Kolben (10) verbundenen Kugelgewindetrieb (16).

2. Verfahren nach Anspruch 1, **dadurch gekennzeichnet, dass** ein Stützelement (28) zum Vorspannen des Kolbens (10) und dem mit dem Kolben (10) verbundenen Kugelgewindetrieb (16) vorgesehen wird (S4), wobei das Stützelement (28) eine Anlauffläche für das Lagerelement (26) zum Lagern des Kolbens (10) und dem mit dem Kolben (10) verbundenen Kugelgewindetrieb (16) bereitstellt.
